# EUROPEAN PATENT APPLICATION

(11) **EP 1 577 631 A1**
(43) Date of publication of application: **21.09.2005**
(21) Application number: 04006552.6
(22) Date of filing: 18.03.2004
(51) Int. Cl.: F28F 9/18, F28F 19/06, C01C 1/04, C01B 21/12

(54) **Method for the manufacture of apparatus for the treatment of highly corrosive agents**

(71) Applicant: UREA CASALE S.A., 6900 Lugano-Besso (CH)
(72) Inventor: Romiti, Domenico, 6900 Lugano (CH); Rizzi, Enrico, 22070 Grandate (CO) (IT)
(74) Representative: Zardi, Marco

(57) **Abstract**

A method for manufacturing a tube bundle heat exchanger (28), with vertical tubes, for the heat exchange, with the descending film technique, between two fluids one of which is highly corrosive, comprising the operating steps of:
- equipping the inner wall with a plurality of steel tubes (28), with a protective coating comprising zirconium, obtaining bimetallic tubes comprising a steel outer layer (36) and a zirconium inner layer (38),
- tying the opposite ends (29) of each of the tubes (28) thus obtained, in respective through holes formed in a first and second steel tube plate (24, 26), each tube (28) having a portion (42) of at least one end projecting from the outer wall (40) of the same tube plate (24, 26),
- making said bimetallic tubes (28) integral with said steel tube plates (24, 26), through respective force weldings between the steel outer layer (36) of each tube and the tube plates (24, 26),
- cutting said projecting end portion (42) of said bimetallic tubes (28), substantially flush with the outer wall (40) of said tube plate (24, 26), obtaining a circular opening edge (50) of each of said bimetallic tubes (28), substantially coplanar with the outer wall (40) of said plate (24, 26) and comprising an steel outer circular layer (52) and a zirconium inner circular layer (54),
- equipping the outer wall (40) of said tube plate (24, 26) and the circular composite opening edge (50) of each bimetallic tube (28) with the same zirconium protective coating (55), making said coating (55) integral with the zirconium inner circular layer (54) of said opening through seal welding.

## Description

### Field of application

The present invention, in its most general aspect, refers to apparatuses intended for treating highly corrosive chemical reagents, with respect to which a specialized, effective and long-lasting protection is required.

In particular, this invention concerns a method for the manufacture of an apparatus of the aforementioned type, in which the treatment of corrosive reagents is substantially a heat treatment.

Yet more specifically, the present invention refers to a method for the manufacture of an apparatus of the aforementioned type, comprising or essentially consisting of a tube bundle heat exchanger, with vertical tubes, structured to carry out a heat exchange with the so-called descending film technique, between two fluids one of which is highly corrosive.

Heat exchange apparatuses falling within the scope of protection of the present invention are, for example, decomposition, condensation or evaporation reactors, stripping apparatuses, boilers and similar devices that require the heat exchange between a process fluid and an operating fluid.

In particular, the method according to the present invention preferably but not exclusively concerns the manufacture of apparatuses that can be used in urea production plants, for the decomposition of ammonium carbamate into ammonia and carbon dioxide, also known as strippers, and, respectively, apparatuses for the condensation of ammonia and carbon dioxide into ammonium carbamate, also known as condensers, in a urea production plant.

### Prior art

It is known that heat exchange realized in tube bundle exchangers with the so-called descending film technique, is widely and advantageously used in the chemical industry in general, for example for the concentration of solutions through evaporation of the solvent, or else by the condensation of vapours and so on.

To carry out a heat exchange with the aforementioned technique, apparatuses with various names are used according to the main function assigned to them, for example: concentrators, evaporators, condensers, strippers, etc., but that basically they essentially consist of or comprise a descending film tube bundle heat exchanger, with vertical tubes.

For this reason and for the sole purpose of simplifying the description and the following claims, with the terms "descending film tube bundle heat exchanger, with vertical tubes", we mean to identify all of the aforementioned apparatuses.

An exchanger of the aforementioned type comprises a shell with vertical axis, closed at the opposite ends by respective walls or bottoms, a tube bundle, supported longitudinally in said shell perimetrically fixed (for example welded) gas-tight to said shell. Due to the presence of such tube plates, in the shell of said heat exchanger three chambers are defined, arranged in axial sequence: a first chamber, between the closed upper end of the shell and the outer wall of the upper tube plate; a second chamber, between the tube plates and a third chamber, between the outer wall of the lower tube plate and the lower closed end of the shell.

In the rest of the description and in the subsequent claims, with the terms "outer wall of the tube plate" we mean to identify the wall of said tube plate facing towards the outside of the tube bundle.

A process fluid is fed into the first chamber and from here descends along the inner wall of the tubes, without filling them up, forming a thin film on it that leaves a consistent empty space at the center of the tubes themselves, whereas the other fluid circulates in the exchanger coming into contact with the outer wall of each single tube of said tube bundle; the product coming out from the tubes is collected in the third chamber from where it is discharged to the outside of the exchanger.

In the specific case of a stripper or condenser, used in urea production plants, the process fluid comprises an aqueous urea solution, ammonium carbamate, ammonia and carbon dioxide, where carbamate and carbon dioxide are highly aggressive agents that notoriously exert a substantial corrosive action on the metallic surfaces with which they come into contact.

In particular, such a corrosive action is more evident at the lower tube plate, where the aqueous solution, coming out from the tube bundle, comprising non-decomposed ammonium carbamate, comes into direct contact both with the lower side of said tube bundle, and with the end portion of the tubes, extending beyond the tube plate itself. The corrosive attack of ammonium carbamate has a particularly great impact on weldings between tubes and tube plate, with them being quickly compromised.

For the protection of the tube bundle against such a corrosive action, each tube thereof is generally coated on the inside with a layer of zirconium, as is the outer wall of the tube plates, above all the lower one.

However, despite the recognized effectiveness of the zirconium coating against the chemical corrosion determined by the aforementioned agents, the techniques provided up to now to equip the tube bundles of heat exchangers of the type considered with such a coating have not allowed completely satisfactory results to be achieved. Indeed, the well known "incompatibility" of zirconium with both carbon and stainless steel, as regards a close bonding of them through welding, is such that in anti-corrosion coatings (zirconium/steel) realized with the prior art, cracks, damages or, in any case, points and zones in which the desired coating is inexistent, occur. This, for example, frequently occurs and above all for the outer coating zones (zirconium) of the tube plate that surround and are in contact with the outer wall (steel) of the tubes tied in it and supported by it.

Besides this, the objective difficulty of manufacturing a zirconium coating on steel tube bundles makes the current production techniques of heat exchangers of the type considered here difficult to actuate, very expensive and with "products" being obtained that require frequent checks and frequent maintenance interventions,

### Summary of the invention

The problem underlying the present invention is that of providing a method for the production of descending film tube bundle heat exchangers, with vertical tubes, of the type specified above, that allows to overcome the cited drawbacks cited with reference to the prior art; in other words that allows the obtainment of heat exchangers that are validly protected in all of their parts against corrosive chemical agents processed in them, that is easier to realize with respect to the methods of the prior art, that is more cost-effective and that has more general application in the chemical industry.

This problem is solved, according to the present invention, by a method for manufacturing a tube bundle heat exchanger, with vertical tubes, for the heat exchange, with the descending film technique, between two fluids one of which is highly corrosive, comprising the operating steps of:
- equipping the inner wall with a plurality of steel tubes, with a protective coating comprising zirconium, obtaining bimetallic tubes comprising a steel outer layer and a zirconium inner layer,
- tying the opposite ends of each of the tubes thus obtained, in respective through holes formed in a first and second steel tube plate, each tube having a portion of at least one end projecting from the outer wall of the same tube plate,
- making said bimetallic tubes integral with said steel tube plates, through respective force weldings between the steel outer layer of each tube and the tube plates,
- cutting said projecting end portion of said bimetallic tubes, substantially flush with the outer wall of said tube plate, obtaining a circular opening edge of each of said bimetallic tubes, substantially coplanar with the outer wall of said plate and comprising an steel outer circular layer and a zirconium inner circular layer,
- equipping the outer wall of said tube plate and the circular composite opening edge of each bimetallic tube with the same zirconium protective coating, making said coating integral with the zirconium inner circular layer of said opening through seal welding.

Further characteristics and advantages of the invention shall become clearer from the description shown hereafter of an example embodiment thereof, given for indicative and not limiting purposes with reference to the attached figures.

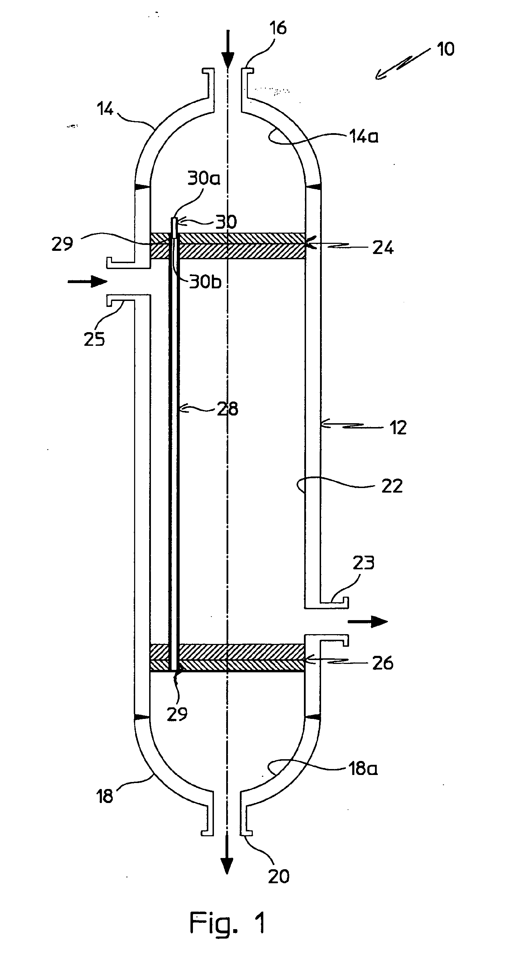

In the drawings
- figure 1 schematically illustrates a descending film tube bundle heat exchanger, with vertical tubes realized with the method of the present invention;
- figures 2-4 schematically illustrate respective operative steps of the method of the present invention relative to a detail of the exchanger of figure 1;
- figure 5 represents an enlarged perspective view from below of an exploded detail of fig. 4.

### Detailed description

With reference to the aforementioned figures, the method according to the invention shall be described relatively to the manufacture of a descending film tube bundle heat exchanger 10, with vertical tubes, which has advantageous and specific use as a stripper of an urea production plant, but it is clear that it can be used as a condenser, evaporator, boiler or similar apparatuses based upon the heat exchange between two fluids.

The heat exchanger 10 comprises a shell 12, with a vertical axis closed at the opposite ends by respective walls or bottoms 14, 18, a tube bundle 28 (of which just one tube 28 is illustrated in the figures for the sake of simplicity), supported longitudinally in said shell 12, through tube plates 24, 26, upper and lower respectively, perimetrically fixed (for example welded) gas-tight to said shell 12. Due to the presence of such tube plates, in the shell 12, of said heat exchanger 10, three chambers are defined, arranged in axial sequence: a first chamber 14a, between the upper bottom 14, and the outer wall of the upper tube plate 24; a second chamber 22, between the tube plates 24 and 26 and a third chamber 18a, between the outer wall of the lower tube plate 26 and the lower bottom 18 of the shell 12.

The upper chamber 14a is in fluid communication with the outside of the shell 12, through an entry duct 16 of, for example, a process fluid, whereas the lower chamber 18a is in fluid communication with it through an exit duct 20 of the fluid.

The second chamber 22 is in communication with the outside of the shell 12 through an upper duct 25, for the introduction into it of a second heat exchange fluid, for example steam at a predetermined pressure and temperature in the specific case of the exchanger/stripper 10, and through a lower duct 23, which takes care of discharging the second heat exchange fluid from said second chamber 22.

In general, each tube 28 of the tube bundle has respective end portions 29 fixed in the respective tube plates 24, 26 and open in the first chamber 14a and in the third chamber 18a, respectively, which are thus in mutual fluid communication.

In order to ensure the formation of a liquid film in contact with the inner wall of each tube 28, avoiding that in any part thereof said liquid can even only partially occupy the "empty" central zone of the tube, separating from the walls thereof, in the first chamber 14a of the exchanger 10, each tube 28 is provided at its upper end 29 with a ferule, or distributor 30. The ferule 30 is essentially formed from a piece of tube, of predetermined length, having one end 30a free, open in the first chamber 14a and the other end 30b tied with a gas-tight seal in the opening of a respective tube 28.

The method for the manufacture of the exchanger 10 shall now be described in detail.

The method according to the invention provides for a preliminary step in which each steel tube 28, before being fixed to the respective tube plate 24, 26, is equipped on the inside with a protective coating comprising zirconium.

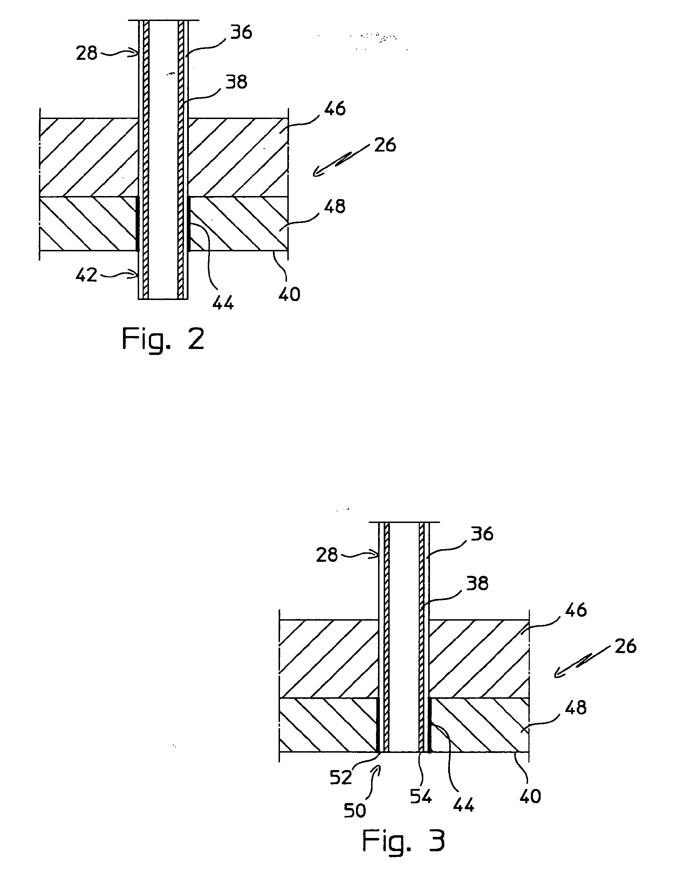

The zirconium coating is applied (laminated) on the inner wall of each steel tube 28, so as to obtain a bimetallic tube comprising a steel outer layer 36 and a zirconium inner layer 38 (fig. 2).

Such a preliminary step is carried out outside of the shell 12, and only afterwards is each end 29 of the tube 28 inserted in a respective through hole formed in the tube plate 24, 26.

For plainness, given that in the case, for example, of the exchanger/stripper 10 of an urea production plant, the joining zone between lower tube plate 26 and the tube bundle 28 is that most exposed to the corrosive action from the process fluid that substantially comprises urea, ammonium carbamate, ammonia and carbon dioxide, hereafter the description of the method according to the invention proceeds making reference only to said lower tube plate 26, still being understood that it can also refer to the upper tube plate 24.

In particular, the insertion of each tube 28 in the lower tube plate 26 is carried out so that an end portion 42 thereof projects from the outer wall 40 of the tube plate 26 itself (fig. 2).

Subsequently the bimetallic tube 28 is made integral with the steel tube plate 26, through a force welding 44 between the steel outer layer 36 of the same bimetallic tube 28 and the tube plate 26.

Preferably, the tube plate 26 is formed from a carbon steel bearer layer 46 and a stainless steel plating 48 and, in particular, the aforementioned force welding 44 is carried out between the steel outer layer 36 of the bimetallic tube 28 and the stainless steel plating 48.

Preferably, the outer layer 36 of the bimetallic tube 28 is also made from stainless steel.

In a subsequent step, the aforementioned projecting portion 42 of the bimetallic tube 28 is cut substantially flush with the outer wall 40 of the tube plate 26. A circular opening edge 50 of the bimetallic tube 28 is thus obtained, substantially coplanar with the outer wall 40 of the lower plate 26 (fig. 3).

The cutting operation (or planishing of the tube plate) can be carried out through any known technology.

For example, metal blades or abrasive discs of the conventional type can be used.

Thanks to the cutting action carried out, the obtained circular opening edge 50 is of the composite type and substantially comprises a steel circular outer layer 52 and a zirconium circular inner layer 54.

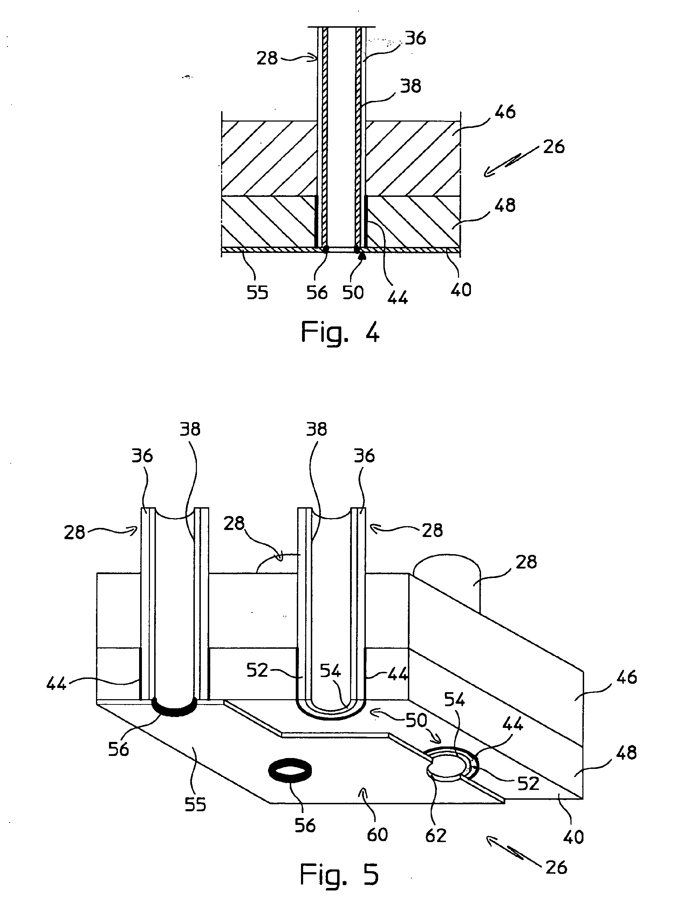

In a subsequent step, the outer wall 40 of the tube plate 26 and the composite circular opening edge 50 of the bimetallic tube 28 is equipped with a zirconium protective coating 55 (figs. 4 and 5).

The zirconium protective coating 55 is manufactured in the same material as the inner circular layer 38 of the bimetallic tube 28, to be easily made integral with it. The making integral is, indeed, obtained through sealing welding 56 which is substantially realized in the opening zone of the zirconium inner layer 38.

The application and making integral of the protective coating 55 on the composite circular opening edge 50 allows the steel outer circular edge 52 of the bimetallic tube to be completely covered thus preventing the direct contact between the outer layer itself 36 and the process fluid coming out towards the third chamber 18a.

A continuity of protection between the protective coating 55 and the inner layer 38 of the bimetallic tube is thus obtained, which ensures the absence of zones lacking zirconium coating.

In a preferred solution, the protective coating 55 is obtained by fixing a pre-perforated foil 60 (fig. 5) on the outer side 40 of the tube plate 26. The pre-perforated foil 60 has holes 62 of diameter equal to, or preferably slightly less than, the diameter of the circular inner layer 38 of the bimetallic tube 28.

At a first moment, each hole 62 of the foil 60 is aligned in the shelter of the opening of the bimetallic tube 28, so as to allow the sealing welding 56 with the inner layer 38 thereof. Then the foil 60 is fixed perimetrically to the shell 12.

The main advantage of the method according to the invention is in that heat exchangers are manufactured that are validly protected in all of their parts, and above all in the opening zone of the bimetallic tube, where the tube plate surrounds the steel outer layer of the tubes and that is most exposed to the corrosive action of the process fluid.

Another advantage of the method according to the present invention is the fact that it allows a heat exchanger that is resistant to the corrosive action of the process fluid to be manufactured in a simple manner without the use of complex apparatuses.

The simplicity and ease of the method come above all from the fact that a cutting action of the end portion of the bimetallic tube is carried out. The cutting allows the composite circular edge to be easily aligned and with a single operation, at the level of the outer wall of the plate, without having to carry out precision operations to obtain such alignment.

In this way, the circular edge of the zirconium inner layer is directly accessible for the application of the protective coating, without further processing.

The alignment of the composite circular edge of the bimetallic tube with the outer wall of the plate also has the advantage of eliminating surfaces discontinuities of the outer wall of the tube plate, and thus eases the application of the zirconium protective coating.

Another advantage is the fact that when the protective layer is applied on the outer side and on the composite circular opening edge, a substantially flat contact surface is obtained between the protective coating and the edge of the inner layer, which eases the adherence between the two elements and the realization of the seal welding.

A further advantage of the present invention is the fact that generic prefabricated steel/zirconium tubes can be used outside of the heat exchanger's shell and for which no specific processing is required for subsequently making it integral with the zirconium protective coating.

## Claims

1. Method for manufacturing a tube bundle heat exchanger (28), with vertical tubes, for the heat exchange, with the descending film technique, between two fluids one of which is highly corrosive, comprising the operating steps of:
- equipping the inner wall with a plurality of steel tubes (28), with a protective coating comprising zirconium, obtaining bimetallic tubes comprising a steel outer layer (36) and a zirconium inner layer (38),
- tying the opposite ends (29) of each of the tubes (28) thus obtained, in respective through holes formed in a first and second steel tube plate (24, 26), each tube (28) having a portion (42) of at least one end projecting from the outer wall (40) of the same tube plate (24, 26),
- making said bimetallic tubes (28) integral with said steel tube plates (24, 26), through respective force weldings between the steel outer layer (36) of each tube and the tube plates (24, 26),
- cutting said projecting end portion (42) of said bimetallic tubes (28), substantially flush with the outer wall (40) of said tube plate (24, 26), obtaining a circular opening edge (50) of each of said bimetallic tubes (28), substantially coplanar with the outer wall (40) of said plate (24, 26) and comprising an steel outer circular layer (52) and a zirconium inner circular layer (54),
- equipping the outer wall (40) of said tube plate (24, 26) and the circular composite opening edge (50) of each bimetallic tube (28) with the same zirconium protective coating (55), making said coating (55) integral with the zirconium inner circular layer (54) of said opening through seal welding.

2. Heat exchanger, comprising a shell (12) with a vertical axis, closed at the opposite ends by respective walls or bottoms (14, 18), a tube bundle (28) with vertical tubes, for the heat exchange, with the descending film technique, between two fluids one of which is highly corrosive, said tube bundle (28) being longitudinally supported in said shell (12) through tube plates (24, 26), upper and lower respectively, perimetrically fixed to said shell (12), **characterized in that** between at least one of the tube plates (24, 26) and each tube (28) the method according to claim 1 is realized.
